# EUROPEAN PATENT APPLICATION

(11) **EP 1 876 747 A1**
(43) Date of publication of application: **09.01.2008**
(21) Application number: 07013323.6
(22) Date of filing: 06.07.2007
(51) Int. Cl.: H04L 1/18

(54) **Method and apparatus for handling transmission errors in a wireless communications system**

(30) Priority: 06.07.2006 US 818530 P
(71) Applicant: Innovative Sonic Limited, Tortola (VG)
(72) Inventor: Kuo, Richard Lee-Chee, Taipei City (TW)
(74) Representative: Hager, Thomas Johannes

(57) **Abstract**

A method for handling transmission errors in a hybrid automatic retransmission request transmitter, or a HARQ transmitter, of a wireless communications system includes creating a counter corresponding to a first packet when a first acknowledgement, called ACK, with respect to the first packet is received (302), and sending a local ACK to an automatic retransmission request transmitter, or an ARQ transmitter, when the counter reaches a predetermined maximum value (304).

## Description

This application claims the benefit of U.S. Provisional Application No. 60/818,530, filed on JULY 6, 2006 and entitled "Method and Apparatus for HARQ NACK to ACK Error Detection", the contents of which are incorporated herein by reference.

The present invention relates to a method for handling transmission errors in a HARQ process of a wireless communications system and related communications device according to the pre-characterizing clause of claims 1 , 8, 1 5, 21 , 27, 33, 39 and 44.

The third generation mobile telecommunications system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates.

Long Term Evolution wireless communications system (LTE system), an advanced high-speed wireless communications system established upon the 3G mobile telecommunications system, supports only packet-switched transmission, and tends to combine Radio Link Control (RLC) layer and Medium Access Control (MAC) layer into the same communication entity, so that the system structure becomes simple.

In the 3G system, MAC entity provides a function of Hybrid Automatic Retransmission Request (HARQ), which is a technology combining Feed-forward Error Correction (FEC) and ARQ methods. In addition, RLC entity can apply specified mechanisms, such as sequence number checking, to provide an ARQ function, which has low retransmission efficiency due to complex operations, and is also called outer-ARQ.

In the prior art, both outer-ARQ and HARQ will be used for LTE system. To decrease complexity of outer-ARQ to enhance retransmission efficiency, the prior art provides a method using the HARQ to assist the outer-ARQ.

The method reveals that an HARQ transmitter provides local acknowledgement and local negative acknowledgement signals, local ACK/local NACK, to an ARQ transmitter upon different events. Local NACK is generated by the HARQ transmitter upon the following two events:
1. When the HARQ transmitter gives up the HARQ transmission due to the maximum retransmission limit.
2. When a NACK-to-ACK error is reported to the HARQ transmitter. In addition, local ACK is generated when none of above two events for an ARQ packet has taken place during a predefined time interval. The HARQ transmitter starts to count the predefined time interval while receiving an ACK. Thus, the predefined time interval is seen as a guard period to protect the HARQ process against the HARQ feedback transmission errors, namely NACK-to-ACK errors.

According to the method of the prior art, the ARQ operation becomes simple, lost packets are detected more quickly, and the amount of feedback signaling is smaller. However, the method may miss the NACK-to-ACK error or misinterpret a legitimate transmission into the NACK-to-ACK error.

In a HARQ process, the HARQ receiver assumes a NACK-to-ACK error when receiving a new transmission while the HARQ receiver expects a retransmission. This implies that after reporting an ACK, the HARQ receiver can determine if there is the NACK-to-ACK error until the next transmission packet is established by the HARQ transmitter and arrives at the HARQ receiver. However, in certain situations, such as heavy traffic load and bad radio condition of a cell, data transmission in queue due to QoS, or occupied buffer status of the HARQ transmitter, the next transmission packet may travel for more than the predefined time interval used in the prior art. In such a situation, even if the HARQ receiver determines a NACK-to-ACK error occurs, the HARQ transmitter has been sent a local ACK to the ARQ transmitter due to no NACK-to-ACK error reported during the predefined time interval. Therefore, the method to set the predefined time interval right after the HARQ transmitter receives an ACK can miss the NACK-to-ACK error due to the insufficient time interval. A solution is to lengthen the time interval. However, setting a long time interval for reducing the missing rate will delay the local ACK report.

As known from the above, the HARQ receiver assumes a NACK-to-ACK error when receiving a new transmission while the HARQ receiver expects a retransmission. However, the new transmission may be established due to giving up retransmission of a precious packet by the HARQ transmitter. The reason to giving up retransmission is that the HARQ receives a NACK associated with the previous packet and besides the maximum number of retransmission is reached. As a result, the result of the simple NACK-to-ACK error detection is incorrect. To avoid this situation so as to enhance the NACK-to-ACK error detection mechanism, the prior art defines a control bit carrying a cause value indicating the cause of the previous HARQ termination associated with each new transmission. For example, the cause value '0' means the previous HARQ termination is because of ACK reception, and the cause value '1' means the previous HARQ termination is not because of ACK reception, such as maximum retransmission number limit or schedule preemption. The schedule preemption is that a high-priority new transmission is allowed to preempt the transmission opportunity from a low-priority retransmission in the HARQ process. With indication of the cause value, the HARQ receiver can accurately determine whether a NACK-to-ACK error occurs or not. A misinterpreted NACK-to-ACK error due to maximum retransmission number limit or preemption can be avoided. Please be reminded that control signaling is expensive in terms of radio resources and thus should be kept on a minimal level in order not to affect system capacity too much.

Instead of using the control signal of the cause value, the prior art proposes a method in which the HARQ receiver checks the maximum retransmission number by itself and thereby does not react with an outer ARQ feedback if the maximum retransmission number is reached and the related packet is failed to receive. The method is applied to a system in which a synchronous HARQ protocol is used and the maximum retransmission number is known at both HARQ transmitter and receiver. In this method of the prior art, if a NACK-to-ACK error occurs at the time when the maximum retransmission number is reached, the HARQ will not report the NACK-to-ACK error. On the other hand, the HARQ confirms the ACK due to no NACK-to-ACK error report and subsequently establishes a new transmission, resulting in packet loss. In addition, the method cannot cover a situation of schedule preemption supported in the HARQ transmitter side. Please be reminded that the schedule preemption allows a low-priority retransmission opportunity to be replaced by a high-priority new transmission. Thus, if a new transmission preempts an on-going retransmission, the HARQ receiver will report a NACK-to-ACK error due to the new transmission which is illegitimate to the HARQ receiver.

This in mind, the present invention aims at providing a method of handling transmission errors in a HARQ process in a wireless communications system and related communications device that can avoid sending local ACKs mistakenly or missing NACK-to-ACK errors.

This is achieved by a method for handling transmission errors in a wireless communications system and related communications device according to claims 1 , 8, 15, 21, 27, 33, 39 and 44. The dependent claims pertain to corresponding further developments and improvements.

As will be seen more clearly from the detailed description following below, the claimed method for handling status reports after handover in a wireless communications system and related communications device includes neglecting a request in the status report received by a transmitter for retransmitting a packet that has been confirmed before.

In the following, the invention is further illustrated by way of example, taking reference to the accompanying drawings. Thereof
Fig. 1 is a functional block diagram of a communications device.
Fig. 2 is a diagram of the program code shown in Fig. 1.
Figs. 3-8 are flowchart diagrams of processes according to embodiments of the present invention.

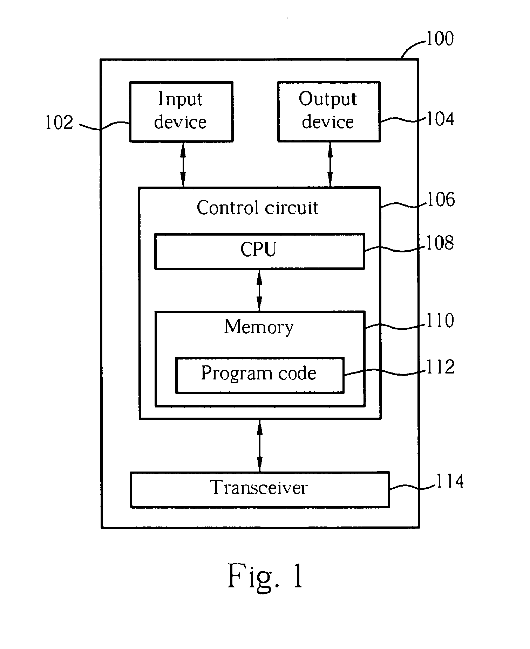

Please refer to Fig. 1, which is a functional block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

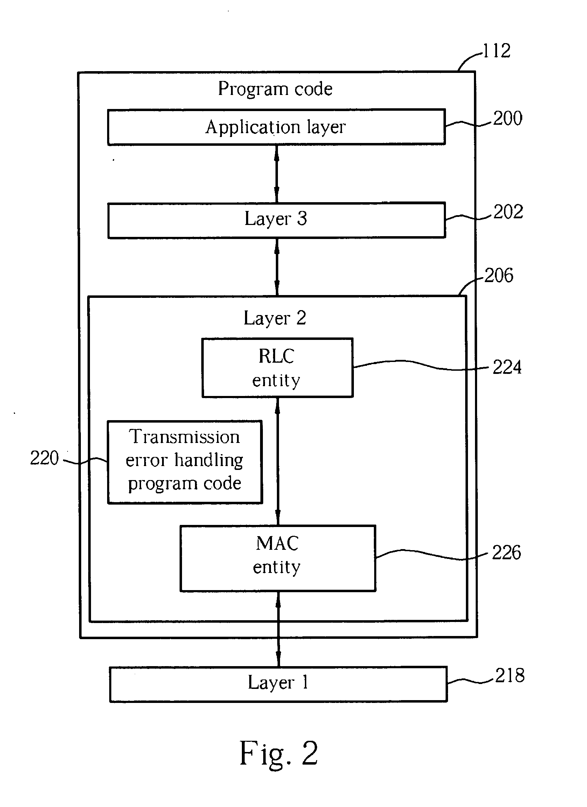

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 224 and a media access control (MAC) entity 226. A primary function of the RLC entity 224 is providing segmentation, reassembly, concatenation, padding, retransmission, sequence check, and duplication detection on transmitted data or control instructions based on different transmission quality requirements. The MAC entity 226 can match packets received from different logic channels of the RLC entity 224 to common, shared, or dedicated transport channels according to radio resource allocation commands of the Layer 3 (RRC layer) 202, for performing channel mapping, multiplexing, transport format selection, or random access control.

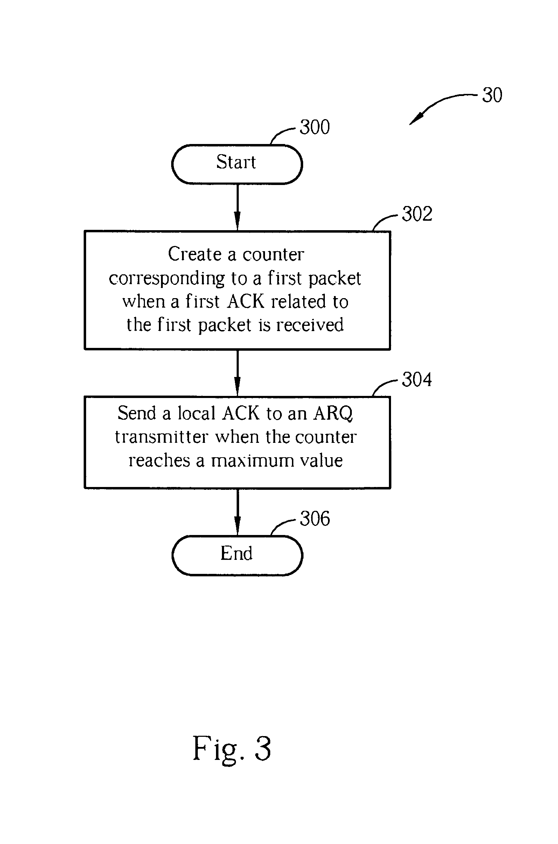

An advanced wireless communications system, such as LTE, supports only packet-switched transmission, so that the RLC entity 224 and the MAC entity 226 are located in the same spot, such as a base station so that they can be combined into one communication entity for simplicity. Note that whether RLC entity 224 and MAC entity 226 are combined into one communication entity is only a modeling issue and is not relevant to the present invention. The present invention provides a transmission error handling program code 220 for improving the NACK-to-ACK error detection mechanism to avoid invalid local ACKs or NACK-to-ACK errors. Please refer to Fig. 3, which illustrates a schematic diagram of a process 30 according to an embodiment of the present invention. The process 30 is utilized for handling transmission error associated with the local ACKs in a wireless communications system, and can be complied into the transmission error handling program code 220. The process 30 comprises the following steps:
- Step 300:: Start.
- Step 302:: Create a counter corresponding to a first packet when a first ACK related to the first packet is received.
- Step 304:: Send a local ACK to an ARQ transmitter when the counter reaches a maximum value.
- Step 306:: End.

According to the process 30, the counter has a default value of 0. Furthermore, the counter value is increased by 1 for each of subsequent packets established after the first packet. The subsequent packets could be new packets or retransmission packets. When a second packet transmitted after the first packet is established, the local ACK to the ARQ transmitter is sent and the counter is deleted if an ACK or NACK signal related to the second packet is received and a NACK-to-ACK error is not received during a round trip time (RTT). In addition, a local NACK is sent to the ARQ transmitter and the counter is deleted if the NACK-to-ACK error is received before the counter reaches the maximum value.

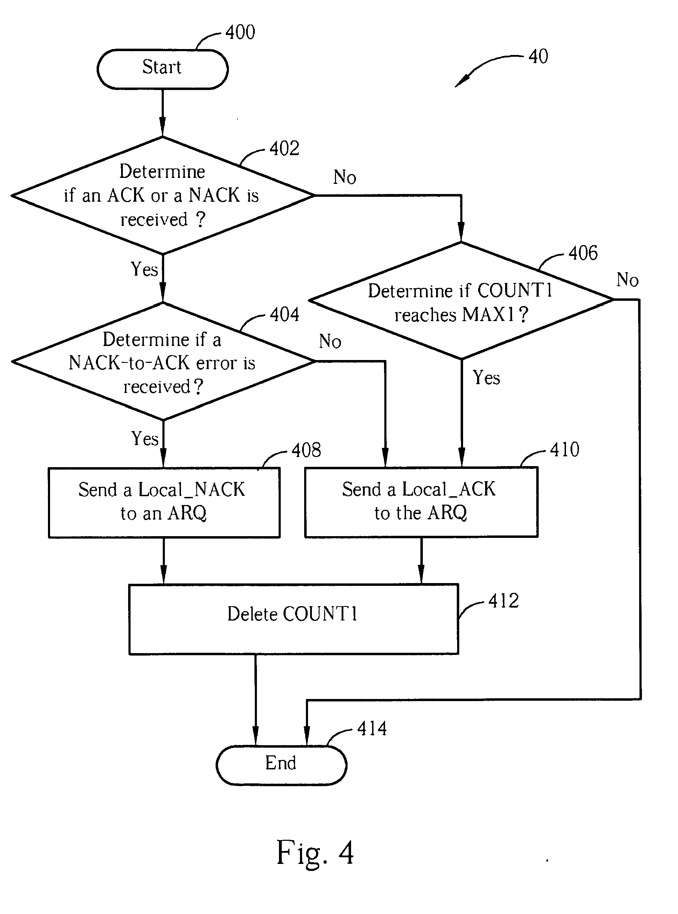

According to the process 30, in a HARQ process, the HARQ transmitter executes a process 40 in each RTT after a counter is created for a packet that is acknowledged. Please refer to Fig. 4, which is a flowchart diagram of the process 40 according to another embodiment of the present invention. Assume a counter COUNT1 has been created and has a default value of 0. The HARQ transmitter shall execute the process 40 in every RTT until the counter COUNT1 is deleted. The process 40 can be compiled complied into the transmission error handling program code 220 and comprises the following steps:
- Step 400:: Start.
- Step 402:: Determine if an ACK or a NACK is received. If so, go to Step 404; if not, go to Step 406.
- Step 404:: Determine if a NACK-to-ACK error is received. If so, go to Step 408; if not, go to Step 410.
- Step 406:: Determine if the counter COUNT1 reaches a maximum value MAX1. If so, go to Step 410; if not, go to Step 414.
- Step 408:: Send a local NACK Local_NACK to an ARQ transmitter ARQ. Then, go to Step 412.
- Step 410:: Send a local ACK Local_ACK to the ARQ transmitter ARQ. Then, go to Step 412.
- Step 412:: Delete the counter COUNT1.
- Step 414:: End.

If the counter COUNT1 is present, the HARQ transmitter increases the value of the counter COUNT1 by 1 each time a new or retransmission packet is established. Step 402 indicates that the HARQ receiver responses with a report signal, the ACK or the NACK, to the transmission established by the HARQ transmitter. Therefore, through the counter COUNT1 , after a packet is acknowledged, the HARQ receiver in the embodiment of the present invention can accurately determine NACK-to-ACK errors irrespective of how the next packet is delayed, and thereby will not affect the local ACK/NACK mechanism in the HARQ transmitter.

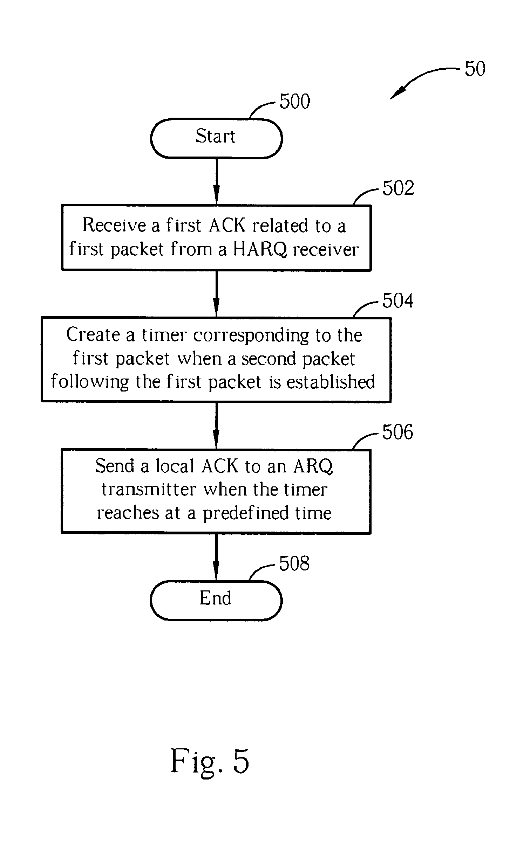

Please refer to Fig. 5, which illustrates a schematic diagram of a process 50 according to an embodiment of the present invention. The process 50 mainly employs a timer to handle transmission error associated with the local ACKs in a wireless communications system, and can be complied into the transmission error handling program code 220. The process 50 comprises the following steps:
- Step 500:: Start.
- Step 502:: Receive a first ACK related to a first packet from a HARQ receiver.
- Step 504:: Create a timer corresponding to the first packet when a second packet following the first packet is established.
- Step 506:: Send a local ACK to an ARQ transmitter when the timer reaches at a predefined time.
- Step 508:: End.

According to the process 50, after the first ACK related to the first packet is received, the HARQ transmitter creates the counter corresponding to the first packet when the second packet is established, following the first packet. The HARQ transmitter sends a local NACK to the ARQ transmitter and deletes the timer if a NACK-to-ACK error is received before the timer expires. Besides, the HARQ transmitter sends the local ACK to the ARQ transmitter and deletes the timer if an ACK or NACK signal related to the second packet is received and the NACK-to-ACK error is not received during a round trip time before the timer reaches at the predefined time. Preferably, the predefined time is set to be a multiple of the round trip time.

In the prior art, the HARQ transmitter starts the timer at the time the previous packet (the first packet) is acknowledged. In this situation, if the time the next packet (the second packet) arrives the HARQ receiver exceeds the predefined time, the HARQ transmitter cannot receive a NACK-to-ACK error in time if the NACK-to-ACK error occurs. The HARQ transmitter may have sent the local ACK to the ARQ transmitter before the HARQ receiver reports the NACK-to-ACK error. In the meantime, packet loss occurs. Compared to the prior art, in the embodiment of the present invention, the HARQ transmitter starts the timer when the next packet (the second packet) is established. Therefore, if the next packet is delayed, the HARQ receiver can still report the NACK-to-ACK error in time. Accordingly, the HARQ transmitter can accurately send the local ACK or NACK error.

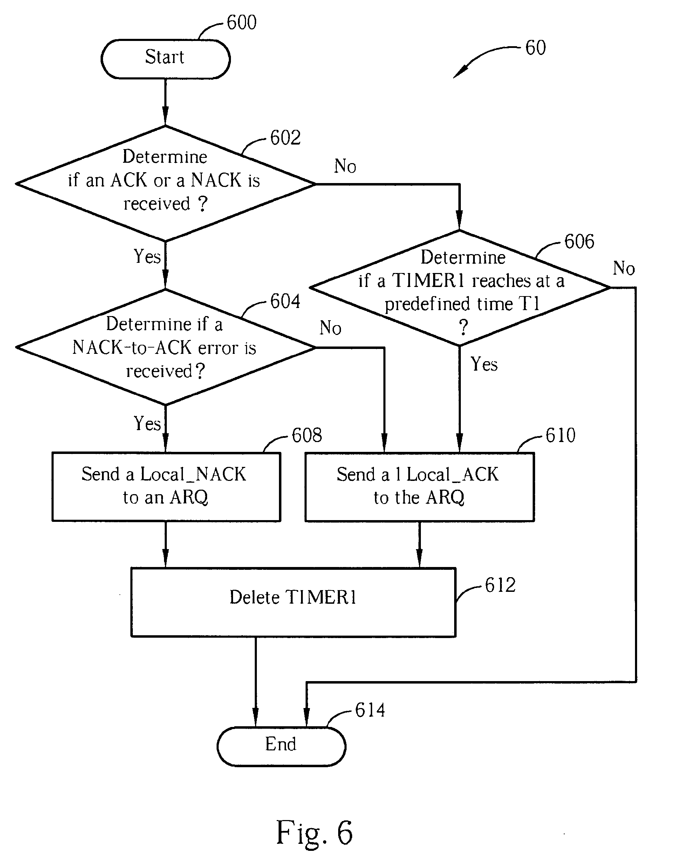

Assume that the HARQ transmitter creates a timer TIMER1 for an acknowledged packet when a subsequent packet is established. The HARQ transmitter then shall execute a process 60 in each RTT until the timer TIMER1 is deleted. Please refer to Fig. 6, which is a flowchart diagram of the process 60 according to another embodiment of the present invention. The process 60 can be compiled complied into the transmission error handling program code 220 and comprises the following steps:
- Step 600:: Start.
- Step 602:: Determine if an ACK or a NACK is received. If so, go to Step 604; if not, go to Step 606.
- Step 604:: Determine if a NACK-to-ACK error is received. If so, go to Step 608; if not, go to Step 610.
- Step 606:: Determine if the timer TIMER1 reaches at a predefined time T1 . If so, go to Step 610; if not, go to Step 614.
- Step 608:: Send a local NACK Local_NACK to an ARQ transmitter ARQ. Then, go to Step 612.
- Step 610:: Send a local ACK Local_ACK to the ARQ transmitter ARQ. Then, go to Step 612.
- Step 612:: Delete the timer TIMER1.
- Step 614:: End.

In the process 60, Step 602 indicates that the HARQ transmitter has transmitted a packet and then the HARQ receiver responds with a report signal, the ACK or NACK, to the packet. Before the timer TIMER1 expires, the HARQ transmitter sends the local ACK Local_ACK to the ARQ transmitter ARQ if any NACK-to-ACK error is received. If no NACK-to-ACK error is received when the timer TIMER1 expires, the HARQ transmitter also sends the local ACK Local-ACK. But if any NACK-to-ACK error is received in each RTT, the HARQ transmitter sends the local NACK Local_{_}NACK. Through the process 60 executed in each RTT, the HARQ receiver can report the NACK-to-ACK error in the predefined time, and doest not affect the local ACK/NACK mechanism in the HARQ transmitter.

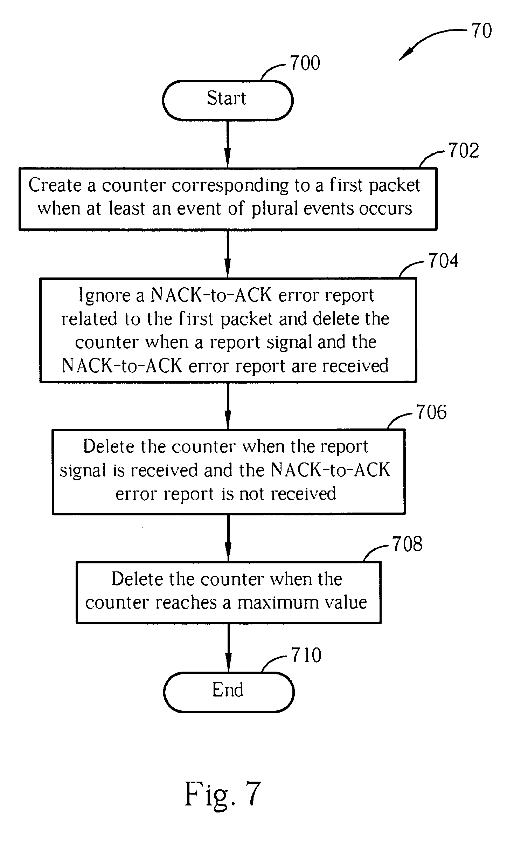

Please refer to Fig. 7, which illustrates a schematic diagram of a process 70 according to an embodiment of the present invention. The process 70 is utilized for handling transmission error associated with the NACK-to-ACK error reports in a wireless communications system, and can be complied into the transmission error handling program code 220. The process 70 comprises the following steps:
- Step 700:: Start.
- Step 702:: Create a counter corresponding to a first packet when at least an event of plural events occurs.
- Step 704:: Ignore a NACK-to-ACK error report related to the first packet and delete the counter when a report signal and the NACK-to-ACK error report are received.
- Step 706:: Delete the counter when the report signal is received and the NACK-to-ACK error report is not received.
- Step 708:: Delete the counter when the counter reaches a maximum value.
- Step 710:: End.

In the process 70, the counter has a default value of 0. The plural events may cause the HARQ transmitter to receive invalid NACK-to-ACK error reports. Preferably, the plural events are that a maximum retransmission number in the HARQ transmitter is reached and thereby a retransmission related to the first packet is canceled, and that a retransmission opportunity related to the first packet is replaced by a new transmission. When any of the plural events occurs, a HARQ receiver may misinterpret a legitimate transmission (the second packet) into the invalid NACK-to-ACK error when the HARQ receiver expects a new packet while receiving a retransmission packet. Thus, after the counter is created, the HARQ transmitter determines whether an ACK or NACK signal is received and a NACK-to-ACK error report related to the first packet is also received during an RTT. If the ACK or NACK signal and the NACK-to-ACK error report are both received, the HARQ transmitter ignores the NACK-to-ACK error report and deletes the counter. This is because the NACK-to-ACK error report here is a misinterpreting result of the HARQ receiver so that the HARQ transmitter shall do no reaction with the error report. On the other hand, the HARQ transmitter also deletes the counter if the report signal is received but no NACK-to-ACK error report is received. If neither report signal nor NACK-to-ACK error report is received, and besides the counter value is smaller than the maximum value, the counter value is increased by 1 when a packet transmitted after the first packet is established, where the packet could be a new packet or a retransmission packet. When the counter reaches the maximum value, the HARQ transmitter deletes the counter. Thus, through the process 70, the embodiment of the present invention does not require extra control signals to indicate the HARQ receiver the cause of the previous HARQ termination and also can avoid invalid NACK-to-ACK errors. Moreover, the process 70 is applied to wireless communications systems with preemption functionality. Therefore, the embodiment of the present invention can avoid packet retransmission due to invalid NACK-to-ACK errors and thereby conserve radio resources.

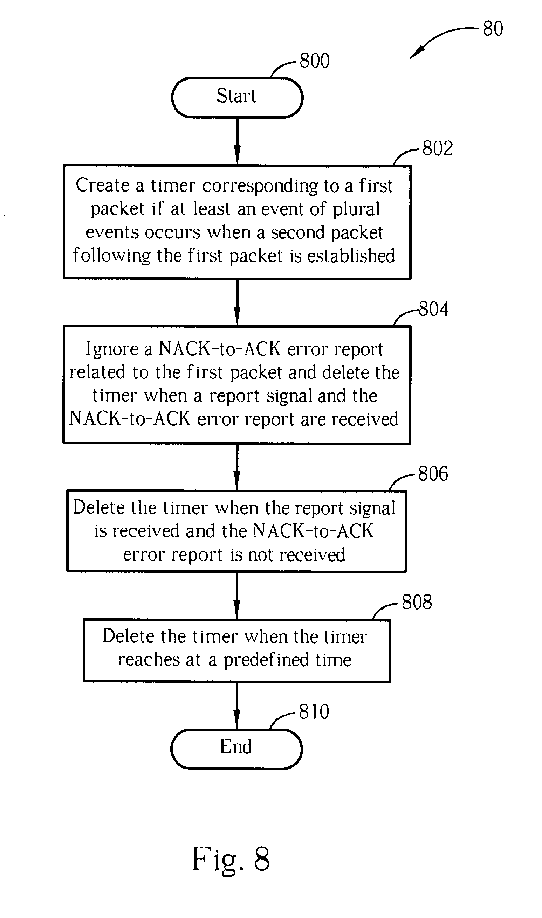

Please refer to Fig. 8, which illustrates a schematic diagram of a process 80 according to an embodiment of the present invention. The process 80 is utilized for handling transmission error associated with the NACK-to-ACK error reports in a wireless communications system, and can be complied into the transmission error handling program code 220. The process 80 comprises the following steps:
- Step 800:: Start.
- Step 802:: Create a timer corresponding to a first packet if at least an event of plural events occurs when a second packet following the first packet is established.
- Step 804:: Ignore a NACK-to-ACK error report related to the first packet and delete the timer when a report signal and the NACK-to-ACK error report are received.
- Step 806:: Delete the timer when the report signal is received and the NACK-to-ACK error report is not received.
- Step 808:: Delete the timer when the timer reaches at a predefined time.
- Step 810:: End.

In the process 80, the plural events may cause the HARQ transmitter to receive invalid NACK-to-ACK error reports. Preferably, the plural events are that a maximum retransmission number in the HARQ transmitter is reached and thereby a retransmission related to the first packet is canceled, and that a retransmission opportunity related to the first packet is replaced by a new transmission. When any of the plural events occurs, a HARQ receiver may misinterpret a legitimate transmission (the second packet) into the invalid NACK-to-ACK error when the HARQ receiver expects a new packet while receiving a retransmission packet. Thus, after the timer is started, during each RTT, the HARQ transmitter determines whether an ACK or NACK signal is received and a NACK-to-ACK error report related to the first packet is also received. If the ACK or NACK signal and the NACK-to-ACK error report are both received, the HARQ transmitter ignores the NACK-to-ACK error report and deletes the counter. This is because the NACK-to-ACK error report here is a misinterpret result of the HARQ receiver so that the HARQ transmitter shall do no reaction with the error report. On the other hand, the HARQ transmitter also deletes the counter if the report signal is received but no NACK-to-ACK error report is received. If neither report signal nor NACK-to-ACK error report is received, and the timer has not expired, the counter value is increased by 1 when a packet transmitted after the first packet is established, where the packet could be a new packet or a retransmission packet. When the timer reaches at the predefined time, the HARQ transmitter deletes the counter. The predefined time is preferably set to be a multiple of the round trip time.. Thus, through the process 80, the embodiment of the present invention does not require extra control signals to indicate the HARQ receiver the cause of the previous HARQ termination and also can avoid invalid NACK-to-ACK errors. Moreover, the process 80 is applied to wireless communications systems with preemption functionality. Therefore, the embodiment of the present invention can avoid packet retransmission due to invalid NACK-to-ACK errors and thereby conserve radio resources.

In summary, regarding the local ACK generation mechanism, the present invention can reduce a missing rate of NACK-to-ACK errors without delaying the local ACK report. Regarding NACK-to-ACK detection mechanism, the present invention can avoid the control signaling and also cover the situation of schedule preemption.

## Claims

1. A method of handling transmission errors in a hybrid automatic retransmission request, called HARQ hereinafter, transmitter of a wireless communications system, **characterized by** the method comprising:
creating a counter corresponding to a first packet when a first acknowledgement, called ACK hereinafter, related to the first packet is received (302); and
sending a local ACK to an ARQ transmitter when the counter reaches a maximum value (304).

2. The method of claim 1 **characterized in that** the counter has a default value of 0.

3. The method of claim 1 **characterized by** the HARQ transmitter further increasing a value of the counter by 1 while a packet transmitted after the first packet is established, wherein the packet is a new packet or a retransmission packet.

4. The method of claim 1 **characterized by** the HARQ transmitter further establishing a second packet that is transmitted after the first packet and sending the local ACK to the ARQ transmitter and deleting the counter if a report signal related to the second packet is received and a NACK-to-ACK error is not received during a round trip time.

5. The method of claim 4 **characterized in that** the report signal is an ACK signal.

6. The method of claim 4 **characterized in that** the report signal is a NACK signal.

7. The method of claim 1 **characterized by** the HARQ transmitter further sending a local NACK to the ARQ transmitter and deleting the counter if a NACK-to-ACK error is received before the counter reaches the maximum value.

8. A communications device (100) utilized in a wireless communications system for accurately handling transmission errors in a HARQ process, the communications device comprising:
a control circuit (106) for realizing functions of the communications device;
a central processing unit (108) installed in the control circuit for executing program codes to operate the control circuit; and
a memory (110) coupled to the central processing unit for storing the program code;
**characterized in that** the program code comprises:
establishing a counter corresponding to a first packet when a first acknowledgement, called ACK hereinafter, related to the first packet is received (302); and
sending a local ACK to an ARQ transmitter when the counter reaches a maximum value (304).

9. The communications device of claim 4 **characterized in that** the counter has a default value of 0.

10. The communications device of claim 9 **characterized in that** the program code further comprises increasing a value of the counter by 1 when a packet transmitted after the first packet is established, wherein the packet is a new packet or a retransmission packet.

11. The communications device of claim 8 **characterized in that** the program code further comprises:
establishing a second packet that is transmitted after the first packet; and
sending the local ACK to the ARQ transmitter and deleting the counter if a report signal related to the second packet is received and a NACK-to-ACK error is not received during a round trip time.

12. The communications device of claim 11 **characterized in that** the report signal is an ACK signal.

13. The communications device of claim 11 **characterized in that** the report signal is a NACK signal.

14. The communications device of claim 8 **characterized in that** the program code further comprises sending a local NACK to the ARQ transmitter and deleting the counter if a NACK-to-ACK error is received before the counter reaches the maximum value.

15. A method of handling transmission errors in a hybrid automatic retransmission request, called HARQ hereinafter, transmitter of a wireless communications system, the method comprising:
receiving a first acknowledgement, called ACK hereinafter, from a HARQ receiver, the first ACK being related to a first packet (502); and
**characterized by** creating a timer corresponding to the first packet when a second packet following the first packet is established (504); and
sending a local ACK to an ARQ transmitter when the timer reaches at a predefined time (506).

16. The method of claim 15 **characterized by** the HARQ transmitter further sending a local NACK to the ARQ transmitter and deleting the timer if a NACK-to-ACK error is received before the timer expires.

17. The method of claim 15 **characterized by** the HARQ transmitter further sending the local ACK to the ARQ transmitter and deleting the timer if a report signal related to the second packet is received and a NACK-to-ACK error is not received during a round trip time.

18. The method of claim 17 **characterized in that** the report signal is an ACK signal.

19. The method of claim 1 7 **characterized in that** the report signal is a NACK signal.

20. The method of claim 1 5 **characterized in that** the predefined time is set to be a multiple of a HARQ round trip time.

21. A communications device (100) utilized in a wireless communications system for accurately handling transmission errors in a HARQ process, the communications device comprising:
a control circuit (106) for realizing functions of the communications device;
a central processing unit (108) installed in the control circuit for executing program codes to operate the control circuit; and
a memory (110) coupled to the central processing unit for storing the program code;
**characterized in that** the program code comprises:
receiving a first acknowledgement, called ACK hereinafter, from a HARQ receiver, the first ACK being related to a first packet (502); and
**characterized by** creating a timer corresponding to the first packet when a second packet following the first packet is established (504); and
sending a local ACK to an ARQ transmitter when the timer reaches at a predefined time (506).

22. The communications device of claim 21 **characterized in that** the program code further comprises sending a local NACK to the ARQ transmitter and deleting the timer if a NACK-to-ACK error is received before the timer reaches at the predefined time.

23. The communications device of claim 21 **characterized in that** the program code further comprises sending the local ACK to the ARQ transmitter and deleting the timer if a report signal related to the second packet is received and a NACK-to-ACK error is not received during a round trip time before the timer reaches at the predefined time.

24. The communications device of claim 23 **characterized in that** the report signal is an ACK signal.

25. The communications device of claim 23 **characterized in that** the report signal is a NACK signal.

26. The communications device of claim 21 **characterized in that** the predefined time is set to be a multiple of a HARQ round trip time.

27. A method of handling transmission errors in a hybrid automatic retransmission request, called HARQ hereinafter, transmitter of a wireless communications system, **characterized by** the method comprising:
creating a counter corresponding to a first packet when at least an event of plural events occurs (702);
ignoring a NACK-to-ACK error report related to the first packet and deleting the counter when a report signal and the NACK-to-ACK error report are received (704);
deleting the counter when the report signal is received and the NACK-to-ACK error report is not received (706); and
deleting the counter when the counter reaches a maximum value (708).

28. The method of claim 27 **characterized in that** the counter has a default value of 0.

29. The method of claim 28 **characterized by** the HARQ transmitter further increasing a value of the counter by 1 when a packet transmitted after the first packet is established, where the packet is a new packet or a retransmission packet.

30. The method of claim 27 **characterized in that** the plural events comprises:
a maximum retransmission number in the HARQ transmitter is reached and thereby a retransmission related to the first packet is canceled; and
a retransmission opportunity related to the first packet is replaced by a new transmission.

31. The method of claim 27 **characterized in that** the report signal is an ACK signal.

32. The method of claim 27 **characterized in that** the report signal is a NACK signal.

33. A communications device (100) utilized in a wireless communications system for accurately handling transmission errors in a HARQ process, the communications device comprising:
a control circuit (106) for realizing functions of the communications device;
a central processing unit (108) installed in the control circuit for executing program codes to operate the control circuit; and
a memory (1 10) coupled to the central processing unit for storing the program code;
**characterized in that** the program code comprises:
creating a counter corresponding to a first packet when at least an event of plural events occurs (702);
ignoring a NACK-to-ACK error report related to the first packet and deleting the counter when a report signal and the NACK-to-ACK error report are received (704);
deleting the counter when the report signal is received and the NACK-to-ACK error report is not received (706); and
deleting the counter when the counter reaches a maximum value (708).

34. The communications device of claim 33 **characterized in that** the counter has a default value of 0.

35. The communications device of claim 34 **characterized in that** the program code further comprises increasing a value of the counter by 1 when a packet transmitted after the first packet is established, wherein the packet is a new packet or a retransmission packet.

36. The communications device of claim 33 **characterized in that** the plural events comprises:
a maximum retransmission number in the HARQ transmitter is reached and thereby a retransmission related to the first packet is canceled; and
a retransmission opportunity related to the first packet is replaced by a new transmission.

37. The communications device of claim 33 **characterized in that** the report signal is an ACK signal.

38. The communications device of claim 33 **characterized in that** the report signal is a NACK signal.

39. A method of handling transmission errors in a hybrid automatic retransmission request, called HARQ hereinafter, transmitter of a wireless communications system, **characterized by** the method comprising:
creating a timer corresponding to a first packet if at least an event of plural events occurs when a second packet following the first packet is established (802);
ignoring a NACK-to-ACK error report related to the first packet and deleting the timer when a report signal and the NACK-to-ACK error report are received (804);
deleting the timer when the report signal is received and the NACK-to-ACK error report is not received (806); and
deleting the timer when the timer reaches at a predefined time (808).

40. The method of claim 39 **characterized in that** the plural events comprises:
a maximum retransmission number in the HARQ transmitter is reached and thereby a retransmission related to the first packet is canceled; and
a retransmission opportunity related to the first packet is replaced by a new transmission.

41. The method of claim 39 **characterized in that** the predefined time is set to be a multiple of a HARQ round trip time.

42. The method of claim 39 **characterized in that** the report signal is an ACK signal.

43. The method of claim 39 **characterized in that** the report signal is a NACK signal.

44. A communications device (100) utilized in a wireless communications system for accurately handling transmission errors in a HARQ process, the communications device comprising:
a control circuit (106) for realizing functions of the communications device;
a central processing unit (108) installed in the control circuit for executing program codes to operate the control circuit; and
a memory (110) coupled to the central processing unit for storing the program code;
**characterized in that** the program code comprises:
creating a timer corresponding to a first packet if at least an event of plural events occurs when a second packet following the first packet is established (802);
ignoring a NACK-to-ACK error report related to the first packet and deleting the timer when a report signal and the NACK-to-ACK error report are received (804);
deleting the timer when the report signal is received and the NACK-to-ACK error report is not received (806); and
deleting the timer when the timer reaches at a predefined time (808).

45. The communications device of claim 44 **characterized in that** the plural events comprises:
a maximum retransmission number in the HARQ transmitter is reached and thereby a retransmission related to the first packet is canceled; and
a retransmission opportunity related to the first packet is replaced by a new transmission.

46. The communications device of claim 44 **characterized in that** the predefined time is set to be a multiple of a HARQ round trip time.

47. The communications device of claim 44 **characterized in that** the report signal is an ACK signal.

48. The communications device of claim 44 **characterized in that** the report signal is a NACK signal.
